# EUROPEAN PATENT APPLICATION

(11) **EP 4 531 415 A1**
(43) Date of publication of application: **02.04.2025**
(21) Application number: 23893128.1
(22) Date of filing: 27.06.2023
(51) Int. Cl.: H04N 25/11

(54) **PIXEL DATA DETERMINATION METHOD AND APPARATUS, AND ELECTRONIC DEVICE**

(30) Priority: 24.11.2022 CN 202211484430
(71) Applicant: Weihai Hualing Opto-Electronics Co., Ltd., Weihai, Shandong 264209 (CN)
(72) Inventor: DAI, Pengfei, Weihai, Shandong 264209 (CN); JIANG, Li, Weihai, Shandong 264209 (CN); XU, Jiaqi, Weihai, Shandong 264209 (CN)
(74) Representative: Zacco GmbH
(86) International application number: PCT/CN2023/102899
(87) International publication number: WO 2024/109028

(57) **Abstract**

A pixel data determination method and apparatus, and an electronic device are provided. **The** method includes: sending a pixel data collection instruction to a line scan sensor; receiving first photosensitive pixel data corresponding to a target pixel row sent by the line scan sensor; cyclically and sequentially sending a preset pixel row movement instruction and the pixel data collection instruction to the line scan sensor until receiving second photosensitive pixel data and third photosensitive pixel data corresponding to the target pixel row sent by the line scan sensor; and determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row. **The** present disclosure solves the technical problem that in the related art, when determining target pixel data corresponding to a target pixel row, the target pixel data may exhibit a color edge.

## Description

### Technical Field

The present disclosure relates to the field of image processing, and specifically, to a pixel data determination method and apparatus, and an electronic device.

### Background

Currently, in the fields of industrial detection and machine vision. two primary methods are employed: area-array cameras combined with various light sources, and line scan and line array sensors. The line array sensor performs linear scanning, and has the advantages of a wide coverage, a compact structure, a space-saving design, 1:1 image reproduction without distortion, etc. This type of line array camera is a line scan camera formed by three rows of red, green, and blue chips. Each pixel point comprises red, green, and blue pixel data. In the scanning process, each pixel point is exposed multiple times, and with the combination of the red, green, and blue photosensitive chips, a color image can be formed with only a single white light illumination. However, using the method to determine the color image can easily result in the occurrence of a color edge in the determined image, which may interfere with the final image determination and recognition.

There are still no effective solutions for the above problem.

### Summary

Embodiments of the present disclosure provide a pixel data determination method and apparatus, and an electronic device, so as to at least solve the technical problems that in the related art, when determining target pixel data corresponding to a target pixel row, the target pixel data may exhibit a color edge.

According to one aspect of an embodiment of the present disclosure, a pixel data determination method is provided, and includes: sending a pixel data collection instruction to a line scan sensor, where the line scan sensor includes three photosensitive chips arranged in parallel, the three photosensitive chips respectively correspond to three colors, and the pixel data collection instruction is configured to enable the three photosensitive chips located at different positions to respectively scan corresponding pixel rows; receiving first photosensitive pixel data corresponding to a target pixel row sent by the line scan sensor, where the first photosensitive pixel data is photosensitive pixel data scanned by a first position photosensitive chip, and when the first photosensitive pixel data corresponding to the target pixel row is acquired, the target pixel row corresponds to a scanning position of the first position photosensitive chip; cyclically and sequentially sending a preset pixel row movement instruction and the pixel data collection instruction to the line scan sensor until receiving second photosensitive pixel data and third photosensitive pixel data corresponding to the target pixel row sent by the line scan sensor, where the second photosensitive pixel data is photosensitive pixel data scanned by a second position photosensitive chip, and the third photosensitive pixel data is photosensitive pixel data scanned by a third position photosensitive chip; when the second photosensitive pixel data corresponding to the target pixel row is acquired, the target pixel row corresponds to a scanning position of the second position photosensitive chip; and when the third photosensitive pixel data corresponding to the target pixel row is acquired, the target pixel row corresponds to a scanning position of the third position photosensitive chip; and determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row.

As at least one alternative embodiment, before the sending a pixel data collection instruction to a line scan sensor, the method further includes: acquiring a scanning area where the line scan sensor scans an object to be scanned; determining an initial scanning position of the scan sensor based on the scanning area; and sending a position adjustment instruction to the line scan sensor, where the position adjustment instruction carries the initial scanning position.

As at least one alternative embodiment, after the determining target pixel data corresponding to the target pixel row based on the first photosensitive pixel data, the second photosensitive pixel data, and the third photosensitive pixel data corresponding to the target pixel row, the method further includes: determining an end scanning position of the scan sensor based on the scanning area; determining all pixel rows from the initial scanning position to the end scanning position; cyclically and sequentially sending the preset pixel row movement instruction and the pixel data collection instruction to the line scan sensor until receiving the first photosensitive pixel data, the second photosensitive pixel data, and the third photosensitive pixel data respectively corresponding to all the pixel rows sent by the line scan sensor; and determining image data corresponding to the scanning area based on the first photosensitive pixel data, the second photosensitive pixel data, and the third photosensitive pixel data respectively corresponding to all the pixel rows.

As at least one alternative embodiment, before the sending a pixel data collection instruction to a line scan sensor, the method further includes: determining a moving pixel row; and determining the pixel data collection instruction and the preset pixel row movement instruction based on the moving pixel row.

As at least one alternative embodiment, the determining a moving pixel row includes: acquiring a target resolution; and determining the target moving pixel row based on the target resolution.

As at least one alternative embodiment, before the determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row, the method includes: acquiring the color correction coefficient corresponding to the line scan sensor.

As at least one alternative embodiment, the three photosensitive chips include: a blue light photosensitive chip, a green light photosensitive chip, and a red light photosensitive chip.

According to one aspect of an embodiment of the present disclosure, a pixel data determination apparatus is provided, and includes: a sending module, configured to send a pixel data collection instruction to a line scan sensor, where the line scan sensor includes three photosensitive chips located at different positions, and the pixel data collection instruction is configured to enable the three photosensitive chips located at the different positions to respectively scan corresponding pixel rows; a receiving module, configured to receive first photosensitive pixel data corresponding to a target pixel row sent by the line scan sensor, where the first photosensitive pixel data is photosensitive pixel data scanned by a first position photosensitive chip, and when the first photosensitive pixel data corresponding to the target pixel row is acquired, the target pixel row corresponds to a scanning position of the first position photosensitive chip; a transceiving module, configured to cyclically and sequentially send a preset pixel row movement instruction and the pixel data collection instruction to the line scan sensor until receiving second photosensitive pixel data and third photosensitive pixel data corresponding to the target pixel row sent by the line scan sensor, where the second photosensitive pixel data is photosensitive pixel data scanned by a second position photosensitive chip, and the third photosensitive pixel data is photosensitive pixel data scanned by a third position photosensitive chip; when the second photosensitive pixel data corresponding to the target pixel row is acquired, the target pixel row corresponds to a scanning position of the second position photosensitive chip; and when the third photosensitive pixel data corresponding to the target pixel row is acquired, the target pixel row corresponds to a scanning position of the third position photosensitive chip; and a determination module, configured to determine target pixel data corresponding to the target pixel row based on the first photosensitive pixel data, the second photosensitive pixel data, and the third photosensitive pixel data corresponding to the target pixel row.

According to one aspect of an embodiment of the present disclosure, an electronic device is provided, and includes a processor; and a memory configured to store executable instructions of the processor, where the processor is configured to execute the instructions to implement any one of the above pixel data determination methods.

According to one aspect of an embodiment of the present disclosure, a computer-readable storage medium is provided. Instructions in the computer-readable storage medium, when executed by a processor of an electronic device, cause the electronic device to perform any one of the above pixel data determination methods.

In the embodiments of the present disclosure, the pixel data collection instruction is sent to the line scan sensor, where the line scan sensor includes the three photosensitive chips arranged in parallel, the three photosensitive chips respectively correspond to three colors, and the pixel data collection instruction is configured to enable the three photosensitive chips located at the different positions to respectively scan the corresponding pixel rows. The first photosensitive pixel data corresponding to the target pixel row sent by the line scan sensor is received. The preset pixel row movement instruction and the pixel data collection instruction are cyclically and sequentially sent to the line scan sensor until receiving the second photosensitive pixel data and the third photosensitive pixel data corresponding to the target pixel row sent by the line scan sensor, where the first photosensitive pixel data is photosensitive pixel data scanned by the first position photosensitive chip, and when the first photosensitive pixel data corresponding to the target pixel row is acquired, the target pixel row corresponds to the scanning position of the first position photosensitive chip; the second photosensitive pixel data is the photosensitive pixel data scanned by the second position photosensitive chip, and the third photosensitive pixel data is the photosensitive pixel data scanned by the third position photosensitive chip; when the second photosensitive pixel data corresponding to the target pixel row is acquired, the target pixel row corresponds to the scanning position of the second position photosensitive chip; and when the third photosensitive pixel data corresponding to the target pixel row is acquired, the target pixel row corresponds to the scanning position of the third position photosensitive chip. The target pixel data corresponding to the target pixel row is determined based on the color correction coefficient corresponding to the line scan sensor, as well as the first photosensitive pixel data, the second photosensitive pixel data, and the third photosensitive pixel data corresponding to the target pixel row. That is, the pixel data of the target pixel row is determined through multi-time scanning based on the respective scanning of the first position photosensitive chip, the second position photosensitive chip, and the third position photosensitive chip, and is obtained through scanning at the determined scanning positions. Compared with the related art, pixel data of a target pixel row is obtained through one-time scanning that scans all pixel data, and after correction through the color correction coefficient, the problem of color fringing may exist. The corresponding pixel data is scanned at the determined scanning positions, such that an area range of the determined pixel data is standard. Correspondingly, the determined pixel data is more accurate, meaning that the problem of color fringing cannot occur, thereby solving the technical problem that in the related art, when the target pixel data corresponding to the target pixel row is determined, the target pixel data may exhibit a color edge.

### Brief Description of the Drawings

The accompanying drawings illustrated herein are used for providing a further understanding of the present disclosure and form a part of this application. Schematic embodiments of the present disclosure and descriptions thereof are used for describing the present disclosure, and do not form improper limitations on the present disclosure. In the accompanying drawings:
Fig. 1 is a flowchart of a pixel data determination method according to an embodiment of the present disclosure;
Fig. 2 is a schematic diagram of pixel points in the prior art;
Fig. 3 is a schematic diagram of an image obtained after using the method according to an optional implementation of the present disclosure;
Fig. 4 is a schematic diagram of pixel data determination according to an optional implementation of the present disclosure;
Fig. 5 is a schematic diagram of pixel data determination in an extension solution according to an optional implementation of the present disclosure; and
Fig. 6 is a block diagram of a structure of a pixel data determination apparatus according to an embodiment of the present disclosure.

### Detailed Description of the Embodiments

In order to make those skilled in the art better understand solutions of the present disclosure, the technical solutions in the embodiments of the present disclosure are clearly and completely described with reference to the accompanying drawings in the embodiments of the present disclosure as below, and it is apparent that the described embodiments are merely a part rather all embodiments of the present disclosure. Based on the embodiments of the present disclosure, all other embodiments obtained by those of ordinary skill in art without creative work shall fall within the scope of protection of the present disclosure.

It should be noted that the terms such as "first" and "second" of the specification and the claims of the present disclosure, as well as the above accompanying drawings are used to distinguish similar objects but are not necessarily intended to describe specific sequences or precedence orders. It should be understood that such used data is interchangeable where appropriate, such that the embodiments of the present disclosure described herein may be implemented in sequences other than those illustrated or described herein. In addition, the terms "include", "have", and any variations thereof are intended to encompass non-exclusive inclusions. For example, a process, a method, a system, a product, or a device including a series of steps or units is not necessarily limited to those explicitly-listed steps or units, but may include other steps or units that are not explicitly listed or inherent to the process, the method, the system, the product, or the device.

### Embodiment 1

According to this embodiment of the present disclosure, an embodiment of a pixel data determination method is provided. It should be noted that steps shown in the flowchart of the accompanying drawings may be performed in a computer system, such as a set of computer-executable instructions. Furthermore, although a logical sequence is shown in the flowchart, in some cases, the steps shown or described may be performed in a different sequence than that presented herein.

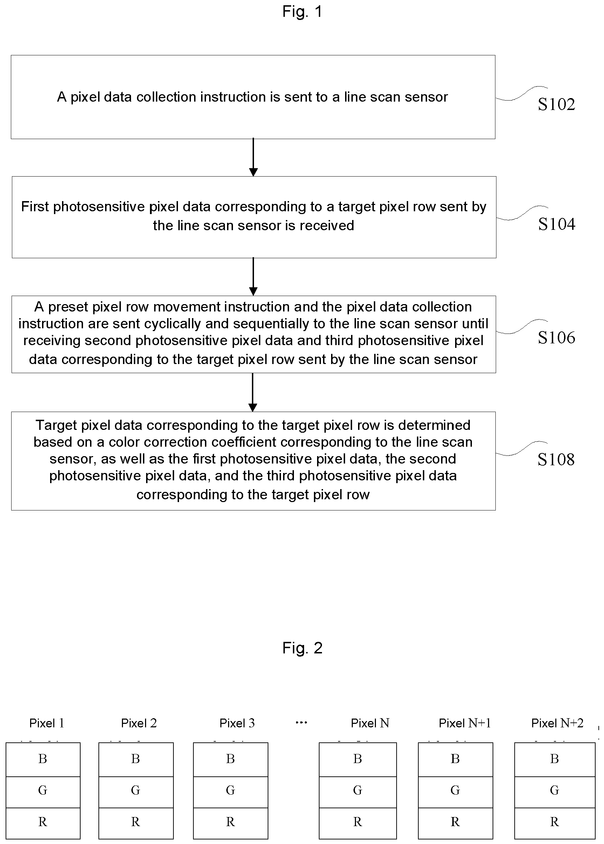

Fig. 1 is a flowchart of a pixel data determination method according to an embodiment of the present disclosure. As shown in Fig. 1, the method includes the following steps:
Step S102: A pixel data collection instruction is sent to a line scan sensor, where the line scan sensor includes three photosensitive chips arranged in parallel, the three photosensitive chips respectively correspond to three colors, and the pixel data collection instruction is configured to enable the three photosensitive chips located at different positions to respectively scan corresponding pixel rows.

In step S102 recorded in the present disclosure, by sending the pixel data collection instruction to the line scan sensor, the pixel data collection instruction may be configured to enable the three photosensitive chips located at the different positions to respectively scan the corresponding pixel rows. Assuming that in a 3*3 pixel image, the first position photosensitive chip scans pixel data of three pixel points in a first row, the second position photosensitive chip scans pixel data of three pixel points in a second row, and the third position photosensitive chip scans pixel data of three pixel points in a third row, each photosensitive chip scans the pixel row corresponding to its exact position, thereby making the determined data of pixels in the pixel rows more accurate.

As an optional embodiment, the three photosensitive chips include: a blue light photosensitive chip, a green light photosensitive chip, and a red light photosensitive chip. In this embodiment, the blue light photosensitive chip may acquire B pixel data, the green light photosensitive chip may acquire G pixel data, and the red light photosensitive chip may acquire R pixel data. As in the above example, assume that the blue light photosensitive chip, the green light photosensitive chip, and the red light photosensitive chip are located at a first position, a second position, and a third position respectively. The first position photosensitive chip, namely the blue photosensitive chip, scans the B pixel data of the three pixel points in the first row. The second position photosensitive chip, namely the green photosensitive chip, scans the G pixel data of the three pixel points in the second row. The third position photosensitive chip, namely the red photosensitive chip, scans the R pixel data of the three pixel points in the third row.

Step S104: First photosensitive pixel data corresponding to a target pixel row sent by the line scan sensor is received, where the first photosensitive pixel data is photosensitive pixel data scanned by the first position photosensitive chip, and when the first photosensitive pixel data corresponding to the target pixel row is acquired, the target pixel row corresponds to a scanning position of the first position photosensitive chip.

In step S104 recorded in the present disclosure, when the first photosensitive pixel data corresponding to the target pixel row is acquired, the target pixel row corresponds to a scanning position of the first position photosensitive chip, such that the obtained first photosensitive pixel data is first photosensitive pixel data at a position corresponding to the scanning position of the first position photosensitive chip, and the first photosensitive pixel data obtained through scanning can be more accurate.

Step S106:a preset pixel row movement instruction and the pixel data collection instruction are sent cyclically and sequentially to the line scan sensor until receiving second photosensitive pixel data and third photosensitive pixel data corresponding to the target pixel row sent by the line scan sensor, where the second photosensitive pixel data is photosensitive pixel data scanned by the second position photosensitive chip, and the third photosensitive pixel data is photosensitive pixel data scanned by the third position photosensitive chip; when the second photosensitive pixel data corresponding to the target pixel row is acquired, the target pixel row corresponds to the scanning position of the second position photosensitive chip; and when the third photosensitive pixel data corresponding to the target pixel row is acquired, the target pixel row corresponds to the scanning position of the third position photosensitive chip.

In step S106 recorded in the present disclosure, through the step, all pixel data of the target pixel row may be acquired by moving the line scan sensor, namely the first photosensitive pixel data, the second photosensitive pixel data, and the third photosensitive pixel data, such that the first photosensitive pixel data, the second photosensitive pixel data, and the third photosensitive pixel data are respectively scanned by the first position photosensitive chip, the second position photosensitive chip, and the third position photosensitive chip at the corresponding positions.

Step S108: Target pixel data corresponding to the target pixel row is determined based on a color correction coefficient corresponding to the line scan sensor, as well as the first photosensitive pixel data, the second photosensitive pixel data, and the third photosensitive pixel data corresponding to the target pixel row.

In step S108 recorded in the present disclosure, through the step, the color correction coefficient is acquired and involved in the correction. A color fringing phenomenon may occur when a method for acquiring pixel data in the related art is used for acquiring the pixel data and the correction is performed based on the color correction coefficient. Therefore, through the step, the problem of the color fringing phenomenon occurring with the involvement of the color correction coefficient can be eliminated. Moreover, the pixel data can be corrected through the color correction coefficient, such that the finally determined target pixel data may restore more real colors.

Through the above steps, the pixel data collection instruction is sent to the line scan sensor, where the line scan sensor includes the three photosensitive chips arranged in parallel, the three photosensitive chips respectively correspond to three colors, and the pixel data collection instruction is configured to enable the three photosensitive chips located at the different positions to respectively scan the corresponding pixel rows. The first photosensitive pixel data corresponding to the target pixel row sent by the line scan sensor is received. The preset pixel row movement instruction and the pixel data collection instruction are cyclically and sequentially sent to the line scan sensor until receiving the second photosensitive pixel data and the third photosensitive pixel data corresponding to the target pixel row sent by the line scan sensor, where the first photosensitive pixel data is photosensitive pixel data scanned by the first position photosensitive chip, and when the first photosensitive pixel data corresponding to the target pixel row is acquired, the target pixel row corresponds to the scanning position of the first position photosensitive chip; the second photosensitive pixel data is the photosensitive pixel data scanned by the second position photosensitive chip, and the third photosensitive pixel data is the photosensitive pixel data scanned by the third position photosensitive chip; when the second photosensitive pixel data corresponding to the target pixel row is acquired, the target pixel row corresponds to the scanning position of the second position photosensitive chip; and when the third photosensitive pixel data corresponding to the target pixel row is acquired, the target pixel row corresponds to the scanning position of the third position photosensitive chip. The target pixel data corresponding to the target pixel row is determined based on the color correction coefficient corresponding to the line scan sensor, as well as the first photosensitive pixel data, the second photosensitive pixel data, and the third photosensitive pixel data corresponding to the target pixel row. That is, the pixel data of the target pixel row is determined through multi-time scanning based on the respective scanning of the first position photosensitive chip, the second position photosensitive chip, and the third position photosensitive chip, and is obtained through scanning at the determined scanning positions. Compared with the related art, pixel data of a target pixel row is obtained through one-time scanning that scans all pixel data, and after the correction through the color correction coefficient, the problem of color fringing may exist. The corresponding pixel data is scanned at the determined scanning positions, such that an area range of the determined pixel data is standard. Correspondingly, the determined pixel data is more accurate, meaning that the problem of color fringing cannot occur, thereby solving the technical problem that in the related art, when the target pixel data corresponding to the target pixel row is determined, the target pixel data may exhibit color fringing.

As an optional embodiment, before the step of sending a pixel data collection instruction to a line scan sensor, the method further includes: acquiring a scanning area where the line scan sensor scans an object to be scanned; determining an initial scanning position of the scan sensor based on the scanning area; and sending a position adjustment instruction to the line scan sensor, where the position adjustment instruction carries the initial scanning position.

In this embodiment, when the line scan sensor needs to scan one object to be scanned, the scanning area that covers the object to be scanned can be determined. The initial scanning position of the scan sensor is determined based on the scanning area, and the position adjustment instruction is sent to the line scan sensor, such that the line scan sensor reaches the initial scanning position in response to the position adjustment instruction, thereby completing image processing in the entire scanning area.

As an optional embodiment, after the step of determining target pixel data corresponding to the target pixel row based on the first photosensitive pixel data, the second photosensitive pixel data, and the third photosensitive pixel data corresponding to the target pixel row, the method further includes: determining an end scanning position of the scan sensor based on the scanning area; determining all pixel rows from the initial scanning position to the end scanning position; cyclically and sequentially sending the preset pixel row movement instruction and the pixel data collection instruction to the line scan sensor until receiving the first photosensitive pixel data, the second photosensitive pixel data, and the third photosensitive pixel data respectively corresponding to all the pixel rows sent by the line scan sensor; and determining image data corresponding to the scanning area based on the first photosensitive pixel data, the second photosensitive pixel data, and the third photosensitive pixel data respectively corresponding to all the pixel rows.

In this embodiment, the pixel data of all the pixel rows in the scanning area is acquired so as to determine the image data corresponding to the scanning area. It should be understood that moving the line scan sensor is equivalent to also moving the positions of the three photosensitive chips. By controlling the three photosensitive chips to respectively scan the corresponding three rows of pixels, corresponding pixel values are obtained until receiving the first photosensitive pixel data, the second photosensitive pixel data, and the third photosensitive pixel data corresponding to all the pixel rows sent by the line scan sensor, thereby determining the final image data, and ensuring that a finally determined image does not exhibit color fringing.

As an optional embodiment, before the step of sending a pixel data collection instruction to a line scan sensor, the method further includes: determining a moving pixel row; and determining the pixel data collection instruction and the preset pixel row movement instruction based on the moving pixel row.

In this embodiment, both the number of pixel rows collected by the pixel data collection instruction and the number of pixel rows moved by the preset pixel row movement may be determined based on an actual application and scenario. Accordingly, the pixel rows to be moved may be determined, and the pixel data collection instruction and the preset pixel row movement instruction are determined based on the moving pixel rows. For example, if moving by the length of one pixel is taken as a target, the moving pixel row is 1, the number of pixel rows collected by the pixel data collection instruction is set to 1, and the number of pixel rows moved by the preset pixel row movement is also set to 1, meaning that the number of pixel rows to be scanned by the photosensitive chips is one row and the number of preset pixel rows to be moved is one row. If moving by the length of two pixels is taken as a target, the moving pixel rows is 2, the number of pixel rows collected by the pixel data collection instruction is set to 2, and the number of pixel rows moved by the preset pixel row movement is set to 1, meaning that the number of pixel rows to be scanned by the photosensitive chips is two rows and the number of preset pixel rows to be moved is one row. By making different settings, the requirements of different applications and scenarios may be met, thereby expanding the scope of protection of this application.

As an optional embodiment, determining a target movement distance includes: acquiring a target resolution; and determining a target moving pixel row based on the target resolution.

In this embodiment, a method for determining a target movement distance is disclosed. For example, when a high resolution is used as half of the high pixel resolution, such as using the resolution of 600DPI (Dots Per Inch) as 300DPI, the movement length changes from original 43.2 um (the length of one pixel as mentioned above) to 84.6 um (the length of two pixels as mentioned above), meaning that the moving pixel row changes from 1 to 2. In this case, the number of pixel rows collected by the pixel data collection instruction changes from 1 to 2, thereby completing pixel collection. Therefore, the method provided in this application may be adjusted based on different resolutions, thereby enhancing applicability of the solution.

As an optional embodiment, before the step of determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row, the method includes: acquiring the color correction coefficient corresponding to the line scan sensor.

In this embodiment, the color correction coefficient is acquired, and therefore the problem of the color fringing phenomenon occurring with the involvement of the color correction coefficient can be eliminated. Moreover, the pixel data can be corrected through the color correction coefficient, such that the finally determined target pixel data may restore more real colors.

Based on the above embodiments and the optional embodiments, an optional implementation is provided, and is specifically described below.

The optional implementation of the present disclosure provides a pixel data determination method. Taking the example of a line scan sensor with three rows of blue, green, and red photosensitive chips arranged in parallel, that is, the blue photosensitive chip is located at a first position, the green photosensitive chip is located at a second position, the red photosensitive chip is located at a third position, and the three rows of blue, green, and red photosensitive chips of the line scan sensor are denoted as B, G, and R. Through one exposure, three rows of pixel data may be obtained: pixel data of blue light of the corresponding row at the first position, pixel data of green light of the corresponding row at the second position, and pixel data of red light of the corresponding at the third position. Through the method provided in the optional implementation of the present disclosure, pixel information of the pixel points can be accurately determined, and the color fringing phenomenon between the pixel rows is eliminated.

Fig. 2 is a schematic diagram of pixel points in the related art. Each pixel point includes light holes of three colors: red, green, and blue. According to the pixel data determination method provided in the optional implementation of the present disclosure, three exposures (equivalent to the scans mentioned above) are involved to acquire all the pixel data of one row of pixel points as shown in Fig. 2.

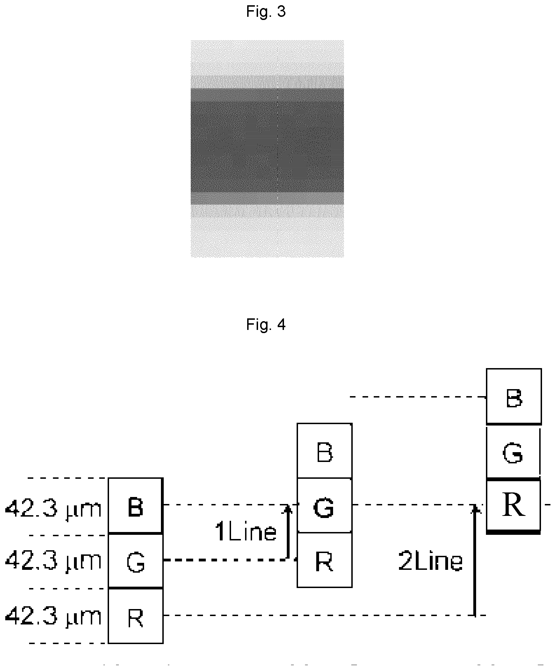

In the related art, directly multiplying the values (B1, G1, R1) by the color correction coefficient results in an image with the color fringing phenomenon. Fig. 3 is a schematic diagram of an image obtained after using the method according to an optional implementation of the present disclosure. As shown in Fig. 3, after the technology is used, an image is formed after multiplying the values (B1, G2, R3) by the color correction coefficient, and in the scanning process, the color fringing phenomenon disappears. The optional implementation of the present disclosure is described in detail below:
S1: A scanning area where a line scan sensor scans an object to be scanned is acquired.
S2: An initial scanning position of the scan sensor is determined based on the scanning area.
S3: A position adjustment instruction is sent to the line scan sensor to move the line scan sensor to the initial scanning position, such that a blue light photosensitive chip can scan pixel points of a first row.
S4: A pixel data collection instruction is sent to the line scan sensor, such that the line scan sensor performs exposure and scanning to obtain pixel data of the first row defined as B1, namely B1 pixel data of the pixel points of the first row, and since the blue photosensitive chip is located at a first position where the pixel points of the first row can be just scanned, a green light photosensitive chip and a red photosensitive chip located behind the blue light photosensitive chip cannot obtain the pixel data of the pixel points.
S5: A preset pixel row movement instruction and the pixel data collection instruction are sent to the line scan sensor, such that the line scan sensor moves by one row in a preset direction and performs exposure and scanning, so as to obtain pixel data G2 of the first row, and pixel data B2 of a second row.
S6: The preset pixel row movement instruction and the pixel data collection instruction are sent to the line scan sensor again, such that the line scan sensor moves by one more row in the preset direction and performs exposure and scanning, so as to obtain pixel data R3 of the first row, pixel data G3 of the second row, and pixel data B3 of a third row.
It should be noted that Fig. 4 is a schematic diagram of pixel data determination according to an optional implementation of the present disclosure. As shown in Fig. 4, Fig. 4 illustrates a determination process of the pixel data (B1, G2, R3) of the pixel points of the first row mentioned above, and dark part in the figure represents the pixel data (B1, G2, R3).
S7: Operations are continued until receiving pixel data B, pixel data G, and pixel data R corresponding to all pixel rows sent by the line scan sensor.
S8: Image data corresponding to the scanning area is determined based on a color correction coefficient, as well as the pixel data B, the pixel data G, and the pixel data R corresponding to all the pixel rows.

It should be noted that in the above process, the determination of the image data corresponding to the scanning area may be the determination of target pixel data corresponding to each pixel row based on the color correction coefficient, as well as the pixel data B, the pixel data G, and the pixel data R corresponding to each pixel row. For example, for a certain pixel point in the first row, pixel data of the pixel point in the first row is (B1, G2, R3) multiplied by the color correction coefficient to wait for a color-corrected color pixel point. In a similar way, pixel points obtained after the N^{th} exposure, the (N+1)^{th} exposure, and the (N+2)^{th} exposure may also be subjected to color correction using the same algorithm.

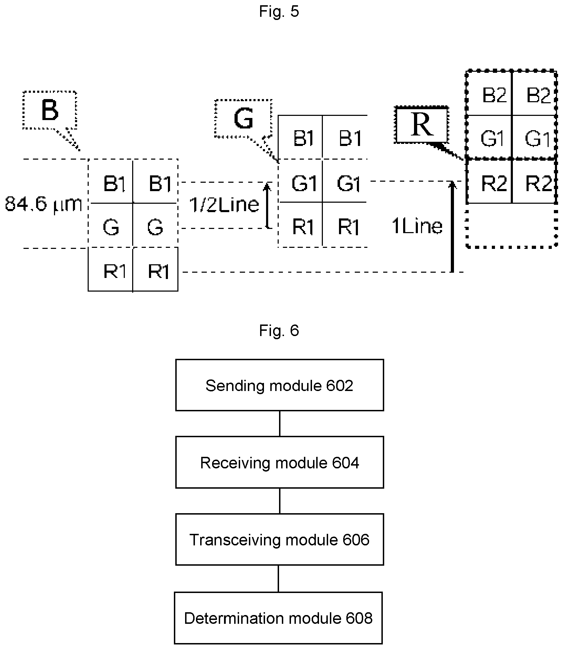

As at least one alternative embodiment, based on the above optional implementation, this application further provides an extension solution for converting a high resolution into a low resolution. Fig. 5 is a schematic diagram of pixel data determination in an extension solution according to an optional implementation of the present disclosure. As shown in Fig. 5, the determination process of the following pixel data (B1, G1, R2) is shown in Fig. 5, the dark part in the figure represents the pixel data (B1, G1, R2), and the solution is specifically described below.

Due to the conversion from the high resolution to the low resolution, based on two original high-resolution pixel points, four pixel points including first-row B1 of a pixel 1, first-row B1 of a pixel 2, G of a row above the pixel 1, and G of a row above the pixel 2 form a new low-resolution pixel point. Assuming that scanning starts from a middle position in the scanning area, and moves in a direction from B to R in the pixel points, the line scan camera with the three rows of blue, green, and red photosensitive chips may perform two exposures to acquire image data of three colors. After the first exposure, red light image data is defined as R1, and blue light image data is B1. When moving to 1/2 line, the second exposure starts, and green light image data G1 is obtained; when moving to 1 line, the exposure is performed to obtain pixel data R2 and B2; and the values (B1, G1, R2) are multiplied by the color correction coefficient to obtain red, green and blue R, G, and B gray values, and the gray values are combined to form a color point as a first-row color pixel point. In a similar way, pixel points obtained after the N^{th} exposure, the (N+1)^{th} exposure, and the (N+2)^{th} exposure may also be subjected to color correction using the same algorithm. In a similar way, pixel points obtained after the N^{th} exposure, the (N+1)^{th} exposure, and the (N+2)^{th} exposure may also be subjected to color correction using the same algorithm.

Through the above optional implementation, at least the following beneficial effects can be achieved: the pixel data of the target pixel row is determined through multi-time scanning via the photosensitive chips at the different positions, and is obtained through scanning at the determined scanning positions. Compared with the related art, pixel data of a target pixel row is obtained through one-time scanning that scans all pixel data, which may result in the problem of color fringing. The corresponding pixel data is scanned at the determined scanning positions, such that an area range of the determined pixel data is standard. Correspondingly, the determined pixel data is more accurate, meaning that the problem of color fringing cannot occur, thereby solving the technical problem that in the related art, when the target pixel data corresponding to the target pixel row is determined, the target pixel data may exhibit color fringing.

It should be noted that for ease of description, the above method embodiments are all described as a series of action combinations. However, those skilled in the art should understand that the present disclosure is not limited to the described action order, as some steps may be performed in another order or simultaneously according to the present disclosure. In addition, those skilled in the art should also understand that all the embodiments described in the specification are preferred embodiments, and the involved actions and modules are not necessary to the present disclosure.

According to the descriptions of the above implementations, those skilled in the art can clearly know that the method according to the above embodiments may be implemented by software and a necessary general-purpose hardware platform, and certainly, may also be implemented by hardware, but the former is a preferred implementation in many cases. Based on such understanding, the technical solutions of the present disclosure essentially or parts making contribution to the prior art may be embodied in the form of a software product. The computer software product is stored in a storage medium (e.g., a ROM/RAM, a magnetic disk, and a compact disc), which includes a plurality of instructions used to allow one terminal device (which may be a mobile phone, a computer, a server, a network device, or the like) to perform the method according to various embodiments of the present disclosure.

### Embodiment 2

According to this embodiment of the present disclosure, an apparatus configured to implement the above pixel data determination method is further provided. Fig. 6 is a block diagram of a structure of a pixel data determination apparatus according to an embodiment of the present disclosure. As shown in Fig. 6, the apparatus includes: a sending module 602, a receiving module 604, a transceiving module 606, and a determination module 608, and the apparatus is described in detail below.

**The** sending module 602 is configured to send a pixel data collection instruction to a line scan sensor, where the line scan sensor includes three photosensitive chips arranged in parallel, the three photosensitive chips respectively correspond to three colors, and the pixel data collection instruction is configured to enable the three photosensitive chips located at different positions to respectively scan corresponding pixel rows. The receiving module 604 is connected to the above sending module 602, and is configured to receive first photosensitive pixel data corresponding to a target pixel row sent by the line scan sensor, where the first photosensitive pixel data is photosensitive pixel data scanned by a first position photosensitive chip, and when the first photosensitive pixel data corresponding to the target pixel row is acquired, the target pixel row corresponds to a scanning position of the first position photosensitive chip. The transceiving module 606 is connected to the above receiving module 604, and is configured to cyclically and sequentially send a preset pixel row movement instruction and the pixel data collection instruction to the line scan sensor until receiving second photosensitive pixel data and third photosensitive pixel data corresponding to the target pixel row sent by the line scan sensor, where the second photosensitive pixel data is photosensitive pixel data scanned by a second position photosensitive chip, and the third photosensitive pixel data is photosensitive pixel data scanned by a third position photosensitive chip; when the second photosensitive pixel data corresponding to the target pixel row is acquired, the target pixel row corresponds to a scanning position of the second position photosensitive chip; and when the third photosensitive pixel data corresponding to the target pixel row is acquired, the target pixel row corresponds to a scanning position of the third position photosensitive chip. The determination module 608 is connected to the above transceiving module 606, and is configured to determine target pixel data corresponding to the target pixel row based on a color correction coefficient corresponding to the line scan sensor, as well as the first photosensitive pixel data, the second photosensitive pixel data, and the third photosensitive pixel data corresponding to the target pixel row.

It should be noted that the sending module 602, the receiving module 604, the transceiving module 606, and the determination module 608 correspond to step S102 to step S108 in the pixel data determination method, and the plurality of modules and the corresponding steps implement the same examples and application scenarios, but are not limited to the content disclosed in Embodiment 1.

### Embodiment 3

According to another aspect of this embodiment of the present disclosure, an electronic device is further provided, and includes a processor; and a memory configured to store executable instructions of the processor, where the processor is configured to execute the instructions to implement any one of the above pixel data determination methods.

### Embodiment 4

According to another aspect of this embodiment of the present disclosure, a computer-readable .storage medium is further provided. Instructions in the computer-readable storage medium, when executed by a processor of an electronic device, cause the electronic device to perform any one of the above pixel data determination methods.

The serial numbers of the above embodiments of the present disclosure are for descriptive purposes only and do not represent the superiority or inferiority of the embodiments.

In the above embodiments of the present disclosure, the embodiments are described with respective focuses. For a part that is not described in detail in an embodiment, reference may be made to related descriptions in other embodiments.

In the several embodiments provided in this application, it should be understood that the disclosed technical content may be implemented in other manners. The apparatus embodiments described above are merely illustrative, such as the unit division which may be a logical function division, and during practical implementation, there may be additional division manners. For example, a plurality of units or components may be combined or integrated into another system, or some features may be ignored or not executed. In addition, shown or discussed mutual coupling or direct coupling or communication connection may be realized through some interfaces, and unit or module indirect coupling or communication connection may be in an electrical form or other forms.

The units described as separate components may or may not be physically separated, and components displayed as units may or may not be physical units, that is, may be located in one position, or may be distributed over a plurality of units. Some or all of the units may be selected according to actual needs to achieve the objectives of the solutions of the embodiments.

In addition, various functional units in the embodiments of the present disclosure may be integrated into one processing unit, each of the units may exist alone physically, or two or more units may be integrated into one unit. The above integrated unit may be implemented in the form of hardware or a software functional unit.

If the integrated unit is implemented in the form of the software functional unit and sold or used as an independent product, the integrated unit may be stored in a computer-readable storage medium. Based on such understanding, the technical solutions of the present disclosure essentially or parts making contribution to the prior art or all or part of the technical solutions may be embodied in the form of a software product. The computer software product is stored in a storage medium and includes a plurality of instructions used to allow a computer device (which may be a personal computer, a server, a network device, or the like) to perform all or part of the steps of the methods in the embodiments of the present disclosure. The aforementioned storage medium includes a U disk, a read-only memory (ROM), a random access memory (RAM), a mobile hard drive, a magnetic disk, an optical disk, or other media capable of storing program code.

The above contents are merely preferred implementations of the present disclosure. It should be noted that a plurality of improvements and refinements may also be made by those of ordinary skill in the art without departing from the principle of the present disclosure, and these improvements and refinements should be regarded as within the scope of protection of the present disclosure.

### Industrial applicability

The solution provided in this embodiment of this application may be applied to the field of image processing. In this embodiment of this application, the pixel data collection instruction is sent to the line scan sensor, where the line scan sensor includes the three photosensitive chips arranged in parallel, the three photosensitive chips respectively correspond to three colors, and the pixel data collection instruction is configured to enable the three photosensitive chips located at the different positions to respectively scan the corresponding pixel rows. The first photosensitive pixel data corresponding to the target pixel row sent by the line scan sensor is received. The preset pixel row movement instruction and the pixel data collection instruction are cyclically and sequentially sent to the line scan sensor until receiving the second photosensitive pixel data and the third photosensitive pixel data corresponding to the target pixel row sent by the line scan sensor, where the first photosensitive pixel data is photosensitive pixel data scanned by the first position photosensitive chip, and when the first photosensitive pixel data corresponding to the target pixel row is acquired, the target pixel row corresponds to the scanning position of the first position photosensitive chip; the second photosensitive pixel data is the photosensitive pixel data scanned by the second position photosensitive chip, and the third photosensitive pixel data is the photosensitive pixel data scanned by the third position photosensitive chip; when the second photosensitive pixel data corresponding to the target pixel row is acquired, the target pixel row corresponds to the scanning position of the second position photosensitive chip; and when the third photosensitive pixel data corresponding to the target pixel row is acquired, the target pixel row corresponds to the scanning position of the third position photosensitive chip. The target pixel data corresponding to the target pixel row is determined based on the color correction coefficient corresponding to the line scan sensor, as well as the first photosensitive pixel data, the second photosensitive pixel data, and the third photosensitive pixel data corresponding to the target pixel row. That is, the pixel data of the target pixel row is determined through multi-time scanning based on the respective scanning of the first position photosensitive chip, the second position photosensitive chip, and the third position photosensitive chip, and is obtained through scanning at the determined scanning positions. Compared with the related art, pixel data of a target pixel row is obtained through one-time scanning that scans all pixel data, and after the correction through the color correction coefficient, the problem of color fringing may exist. The corresponding pixel data is scanned at the determined scanning positions, such that an area range of the determined pixel data is standard. Correspondingly, the determined pixel data is more accurate, meaning that the problem of color fringing cannot occur, thereby solving the technical problem that in the related art, when the target pixel data corresponding to the target pixel row is determined, the target pixel data may exhibit color fringing.

## Claims

1. A pixel data determination method, comprising:
sending a pixel data collection instruction to a line scan sensor, wherein the line scan sensor comprises three photosensitive chips arranged in parallel, the three photosensitive chips respectively correspond to three colors, and the pixel data collection instruction is configured to enable the three photosensitive chips located at different positions to respectively scan corresponding pixel rows;
receiving first photosensitive pixel data corresponding to a target pixel row sent by the line scan sensor, wherein the first photosensitive pixel data is photosensitive pixel data scanned by a first position photosensitive chip, and when the first photosensitive pixel data corresponding to the target pixel row is acquired, the target pixel row corresponds to a scanning position of the first position photosensitive chip;
cyclically and sequentially sending a preset pixel row movement instruction and the pixel data collection instruction to the line scan sensor until receiving second photosensitive pixel data and third photosensitive pixel data corresponding to the target pixel row sent by the line scan sensor, wherein the second photosensitive pixel data is photosensitive pixel data scanned by a second position photosensitive chip, and the third photosensitive pixel data is photosensitive pixel data scanned by a third position photosensitive chip; when the second photosensitive pixel data corresponding to the target pixel row is acquired, the target pixel row corresponds to a scanning position of the second position photosensitive chip; and when the third photosensitive pixel data corresponding to the target pixel row is acquired, the target pixel row corresponds to a scanning position of the third position photosensitive chip; and
determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row.

2. The method as claimed in claim 1, wherein before the sending a pixel data collection instruction to a line scan sensor, the method further comprises:
acquiring a scanning area where the line scan sensor scans an object to be scanned;
determining an initial scanning position of the scan sensor based on the scanning area; and
sending a position adjustment instruction to the line scan sensor, wherein the position adjustment instruction carries the initial scanning position.

3. The method as claimed in claim 2, wherein after the determining target pixel data corresponding to the target pixel row based on the first photosensitive pixel data, the second photosensitive pixel data, and the third photosensitive pixel data corresponding to the target pixel row, the method further comprises:
determining an end scanning position of the scan sensor based on the scanning area;
determining all pixel rows from the initial scanning position to the end scanning position;
cyclically and sequentially sending the preset pixel row movement instruction and the pixel data collection instruction to the line scan sensor until receiving first photosensitive pixel data, second photosensitive pixel data, and third photosensitive pixel data respectively corresponding to all the pixel rows sent by the line scan sensor; and
determining image data corresponding to the scanning area based on the first photosensitive pixel data, the second photosensitive pixel data, and the third photosensitive pixel data respectively corresponding to all the pixel rows.

4. The method as claimed in claim 1, wherein before the sending a pixel data collection instruction to a line scan sensor, the method further comprises:
determining a moving pixel row; and
determining the pixel data collection instruction and the preset pixel row movement instruction based on the moving pixel row.

5. The method as claimed in claim 4, wherein the determining a moving pixel row comprises:
acquiring a target resolution; and
determining the target moving pixel row based on the target resolution.

6. The method as claimed in claim 1, wherein before the determining target pixel data corresponding to the target pixel row based on a color correction coefficient corresponding to the line scan sensor, as well as the first photosensitive pixel data, the second photosensitive pixel data, and the third photosensitive pixel data corresponding to the target pixel row, the method further comprises:
acquiring the color correction coefficient corresponding to the line scan sensor.

7. The method as claimed in any one of claims 1 to 6, wherein the three photosensitive chips comprise: a blue light photosensitive chip, a green light photosensitive chip, and a red light photosensitive chip.

8. A pixel data determination apparatus, comprising:
a sending module, configured to send a pixel data collection instruction to a line scan sensor, wherein the line scan sensor comprises three photosensitive chips arranged in parallel, the three photosensitive chips respectively correspond to three colors, and the pixel data collection instruction is configured to enable the three photosensitive chips located at different positions to respectively scan corresponding pixel rows;
a receiving module, configured to receive first photosensitive pixel data corresponding to a target pixel row sent by the line scan sensor, wherein the first photosensitive pixel data is photosensitive pixel data scanned by a first position photosensitive chip, and when the first photosensitive pixel data corresponding to the target pixel row is acquired, the target pixel row corresponds to a scanning position of the first position photosensitive chip;
a transceiving module, configured to cyclically and sequentially send a preset pixel row movement instruction and the pixel data collection instruction to the line scan sensor until receiving second photosensitive pixel data and third photosensitive pixel data corresponding to the target pixel row sent by the line scan sensor, wherein the second photosensitive pixel data is photosensitive pixel data scanned by a second position photosensitive chip, and the third photosensitive pixel data is photosensitive pixel data scanned by a third position photosensitive chip; when the second photosensitive pixel data corresponding to the target pixel row is acquired, the target pixel row corresponds to a scanning position of the second position photosensitive chip; and when the third photosensitive pixel data corresponding to the target pixel row is acquired, the target pixel row corresponds to a scanning position of the third position photosensitive chip; and
a determination module, configured to determine target pixel data corresponding to the target pixel row based on a color correction coefficient corresponding to the line scan sensor, as well as the first photosensitive pixel data, the second photosensitive pixel data, and the third photosensitive pixel data corresponding to the target pixel row.

9. An electronic device, comprising:
a processor; and
a memory, configured to store executable instructions of the processor,
wherein the processor is configured to execute the instructions to implement the pixel data determination method as claimed in any one of claims 1 to 7.

10. A computer-readable storage medium, wherein instructions in the computer-readable storage medium, when executed by a processor of an electronic device, cause the electronic device to perform the pixel data determination method as claimed in any one of claims 1 to 7.
